Europäisches Patentamt

**European Patent Office**

Office européen des brevets

(19)

(11) Publication number: **0 260 244**
**A2**

(12) **EUROPEAN PATENT APPLICATION**

(21) Application number: **87850279.8**

(22) Date of filing: **11.09.87**

(51) Int. Cl.⁴: **C 02 F 3/30**

(30) Priority: **12.09.86 SE 8603843**

(43) Date of publication of application:
**16.03.88 Bulletin 88/11**

(84) Designated Contracting States:
**AT BE CH DE ES FR GB IT LI NL**

(71) Applicant: **Vyrmetoder AB**
**Näsbydalsvägen 13**
**S-183 31 Täby (SE)**

(72) Inventor: **Martinell, Rudolf Hakan**
**Ragvägen 4A**
**S-183 67 Täby (SE)**

(74) Representative: **Delmar, John-Ake**
**Östermalmsgatan 45**
**S-114 26 Stockholm (SE)**

(54) A process for the purification of wastewater containing nitrate and/or nitrite.

(57) Wastewater containing nitrate and/or nitrite is purified by passing said water, in a first stage, under reducing conditions through a basin or a filter containing naturally occurring filter material. The reduced water is then oxygenated in a second stage and kept in a basin until the oxidation processes are completed.

EP 0 260 244 A2

**Description**

A process for the purification of wastewater containing nitrate and/or nitrite

The present invention relates to a process for the purification of wastewater containing nitrate and/or nitrite, e g after a preceding chemical and/or biological purification.

It is known that the nitrate content in an aquifer may be decreased in situ by introducing water containing denitrification organisms and/or substrate therefore intermittently through a number of injection wells arranged around one or more extraction wells for purified water.

Nitrate-containing wastewater from e g starch factories, breweries, etc usually has to be purified in order to decrease the nitrate content before the wastewater is permitted to infiltrate an aquifer or nowadays may be discharged into a receiving body of water. According to the invention such a purification is effected by treating the wastewater in a two-stage process (one reduction stage and one oxidation stage).

Thus, the invention relates to a process for the purification of wastewater containing nitrate and/or nitrite, characterized in that the wastewater in a first stage under reducing conditions is passed through a basin or a filter containing naturally occurring filter material, and that the reduced water in a second stage is oxygenated and kept in a basin until the oxidation processes are completed.

In the first stage the wastewater preferably is added through a number of injection wells or injection drain pipes arranged around the periphery of the basin or the filter. The reduced water may be recirculated to the inlet of the reduction basin if the reduction has not been satisfactory. After the oxygenation in the second stage the water may be circulated in a basin while the redox potential is measured.

Wastewater is normally free from oxygen and contains reducing microorganisms, mainly bacteria, which in the first stage of the process according to the invention will bring about a reduction of nitrate and nitrite to ammonia (ammonium ion) and nitrogen. The addition of a suitable substrate in the reduction stage may possibly be necessary in order to bring about a quick lowering of the reduction potential, partly due to the demand for a short holding time in this stage. The ammonia and the ammonium ions formed in the reduction stage (or present in the wastewater from the beginning) are oxidized to nitrogen in the oxidation stage. At the same time small residual amounts, if any, of nitrite are oxidized to nitrate.

A preferred embodiment of the invention will be described below in greater detail.

A wastewater having a high content of nitrate and possibly nitrite is pumped to a number of injection wells or injection drain pipes (e g six) arranged around the periphery of a basin or a filter container containing sand or a mixture of sand and macadam. Other filter materials may also be used, e g alkaline filter materials such as dolomite. For instance, soil may be excavated to form a cavity, and a sealing layer of clay, concrete, plastics tarpaulin or the like may be applied along the mantle surface. The basin is then filled with the filter material. A filter container of steel or plastics or other material may be employed instead of such a basin. Depending upon the water flow the wastewater may be fed - via one or more ring drain pipes - to all the injection wells simultaneously or to only one or a few wells at a time according to a certain schedule. If necessary, substrate for the reducing microorganisms is added to the wastewater before said water is fed to the injection wells. The holding time of the wastewater in the basin or the filter is about 1-20 hours, preferably 3-4 hours. The reduced water is drawn from a central extraction well and is fed to the second stage.

The injection wells will gradually be clogged by deposits and they will therefore be subjected to an intermittent cleaning. Thus, deposits are sucked out of the various injection wells in turns by shock pumping by means of a pump (e g for 20-30 seconds 3-5 times every day).

The reduced water from the central extraction well is oxygenated in e g a conventional type oxygenator and is then fed to a basin wherein the oxygenated water is circulated until the oxidation processes are completed. Suitably the water is circulated via an oxygenator for releasing nitrogen and other gases under simultaneous oxygenation. The oxidation processes may be followed by measuring the redox potential. For instance, it may be mentioned that the redox potential of the oxidized water should exceed 200 mV at a pH value of 7. The basin used in the oxidation stage may also be filled with naturally occurring filter material but usually this is not necessary. The resulting purified wastewater is discharged into a receiving body of water or is infiltrated into an aquifer.

By the process according to the invention as described above the nitrate content in wastewater may be decreased from e g 50-1 000 mg/l to less than 25 mg/l.

**Claims**

1. A process for the purification of wastewater containing nitrate and/or nitrite, characterized in that the wastewater in a first stage under reducing conditions is passed through a basin or a filter containing naturally occurring filter material, and that the reduced water in a second stage is oxygenated and kept in a basin until the oxidation processes are completed.

2. A process according to claim 1, characterized in that, in the first stage, the wastewater is added through a number of injection wells or injection drain pipes arranged around the periphery of the basin or the filter.

3. A process according to claim 1 or 2, characterized in that a substrate is added to the wastewater before said water is introduced into the basin or the filter.

4. A process according to any of the claims 1-3, characterized in that the reduced water is recirculated to the inlet of the reduction basin.

5. A process according to any of the claims 1-4, characterized in that the water from the first stage after having been oxygenated is circulated in a basin via an oxygenator while the redox potential is measured.